# EUROPEAN PATENT SPECIFICATION

(11) **EP 3 578 398 B1**
(45) Date of publication and mention of the grant of the patent: **28.08.2024**
(21) Application number: 18852758.4
(22) Date of filing: 01.06.2018
(51) Int. Cl.: B60H 1/32, B60H 1/08, F25B 1/00, F25B 5/02, F25B 49/02, F28F 27/02

(54) **MULTI-STAGE SPLIT INDEPENDENT CONTROL COOLING SYSTEM**
MEHRSTUFIGES GETEILTES KÜHLSYSTEM MIT UNABHÄNGIGER STEUERUNG
SYSTÈME DE REFROIDISSEMENT DIVISÉ À ÉTAGES MULTIPLES À COMMANDE INDÉPENDANTE

(30) Priority: 25.01.2018 KR 20180009087
(43) Date of publication of application: 11.12.2019
(73) Proprietor: Ko, Hong-dal, Seoul 06652 (KR)
(72) Inventor: Ko, Hong-dal, Seoul 06652 (KR)
(74) Representative: dompatent von Kreisler Selting Werner - Partnerschaft von Patent- und Rechtsanwälten mbB
(86) International application number: PCT/KR2018/006281
(87) International publication number: WO 2019/146846

(56) References cited:
- WO-A1-2017/156104
- JP-A- 2003 182 348
- JP-A- 2005 301 654
- JP-A- 2007 176 302
- JP-A- 2013 145 114
- JP-A- H08 193 777
- JP-A- H09 270 063
- JP-A- H10 197 194
- JP-A- H10 197 194
- KR-A- 19990 040 080
- KR-A- 20110 090 379
- KR-A- 20110 090 379
- KR-A- 20150 102 420
- US-A1- 2005 028 544
- US-A1- 2006 272 342

## Description

### [Technical Field]

The present invention relates to an independently controlled multi-column split cooling system, and more particularly to technology in which a plurality of evaporators arranged in right and left columns in parallel and split from one another in a vertical direction are used, instead of a single evaporator generally used in cooling systems of buses or railway vehicles, and the evaporators are independently controlled according to control of cooling capacities so as to increase energy efficiency.

### [Background Art]

In general, a cooling system is applied to public transportation, such as buses, railway vehicles, etc., so as to provide a pleasant environment to passengers, and such a cooling system includes a compressor to convert a refrigerant in a low-temperature/low-pressure gaseous state into a high-temperature/high-pressure gaseous state, a condenser to convert the refrigerant supplied from the compressor into a liquid state, and an evaporator to evaporate the refrigerant in a low-temperature/low-pressure liquid state into the low-temperature/low-pressure gaseous state.

The above cooling system is broadly divided into a compression section in which the refrigerant is compressed, a condensation section in which thermal energy of the compressed refrigerant is emitted to the outside of the system, and an evaporation section in which the inside of a bus or a railway vehicle is cooled by absorbing thermal energy from a compartment.

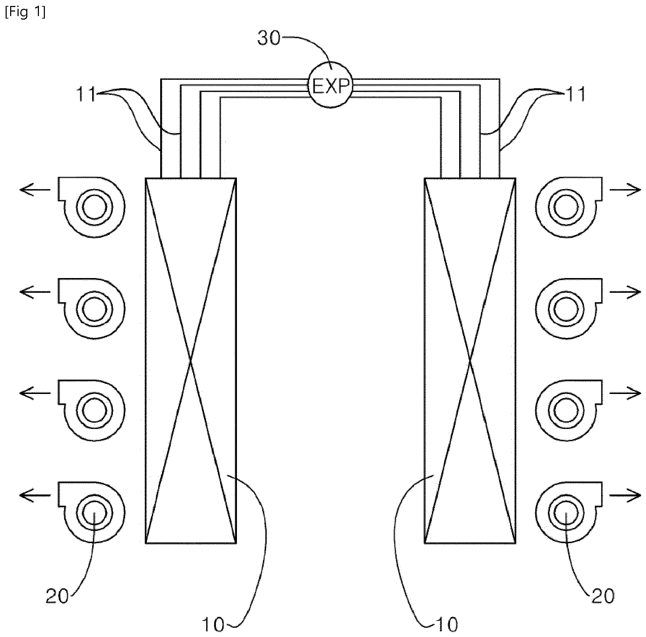

As the conventional evaporator installed in the evaporation section, as exemplarily shown in FIG. 1, copper coil-type large-scale evaporators, in which a plurality of copper pipes is connected to one large-scale evaporator to inject a refrigerant thereinto, are used, and cold air flows into the interior of a vehicle by a plurality of fans. However, such a configuration occupies a large volume and weight as compared with cooling performance thereof, and requires operation of the entirety of the large-scale evaporator and thus lowers energy efficiency.

As a related art document, Korean Registered Patent No. 10-0931078 (entitled "Air conditioner for buses") discloses a configuration of an air conditioner including a case forming the external appearance of the air conditioner, a main frame forming the skeleton of the air conditioner, intake holes formed through the front surface of the case so that external air flows into the air conditioner through the intake holes, ducts forming flow paths of the external air flowing into the intake holes and providing a mounting space of a condenser, condensation fans supported by the ducts above the condenser, and evaporators provided at both sides of the condenser to exchange heat between a refrigerant and intake air and then to discharge cold air to the interior of a bus, the ducts provided with indoor-side duct holes through which the external air flows to the interior of the bus and outdoor-side duct holes through which the external air flows to the condenser.

The above-described related art technology is characterized in that the external air intake ducts support the condenser and the condensation fans, and does not include any configuration to increase energy efficiency of the evaporators.

As another related art document, Korean Patent Laid-open Publication No. 10-2013-0031164 (entitled "Air-conditioning system of bus and air conditioning method of bus") discloses an air blowing amount real-time control system including a heating and cooling device to supply air of a set temperature, a main duct to transfer the air of the set temperature from the heating and cooling device, a plurality of individual ducts branched off from the main duct to transfer air of temperatures set according to respective seats, air blowing amount controllers to control opening and closing of the individual ducts, an air flow sensor to measure change in an air volume in the main duct according to opening and closing degrees of the air blowing amount controllers, and a controller to determine an operation level of the heating and cooling device according to change in the air volume measured by the air flow sensor. JP 2013 145114 A discloses a cooling system arranged in parallel with an expansion valve for adiabatically expanding the refrigerant compressed by the compressor and condensed by the condenser, and wherein the refrigerant is adiabatically expanded by the expansion valve; a plurality of evaporators, each having an evaporation fan, an expansion valve and an electronic valve, are arranged in right and left columns in parallel.

In the above-descried related art technology, whether or not the individual ducts are opened and closed, adjusted according to passengers' acts of opening and closing of air vents, are measured through the sensor and an overall supply level of cold air and an air blowing amount are controlled thereby, but electrical energy consumed when a cooling cycle is operated cannot be saved just by controlling the air blowing amount. Further, such related art technology still cannot solve structural reduction of cooling efficiency caused due to large-scale evaporators.

Further, as technology using a plurality of evaporators which is not related to a cooling system to be provided by the present invention, Korean Registered Utility Model No. 20-0306048 (entitled "Multi unit cooler system") discloses a cooler system including a plurality of evaporators contacting cooling spaces to perform heat exchange and connected in parallel, a compressor connected to the evaporators to compress a refrigerant in a low-temperature and low-pressure gaseous state evaporated by the respective evaporators, a condenser connected to the compressor to condense the refrigerant in a high-temperature and high-pressure gaseous state compressed by the compressor through heat exchange with a surrounding environment (atmosphere or cooling water), and an expansion valve connected to the condenser to expand the refrigerant in a liquid state through throttling and then supply the expanded refrigerant to the evaporators.

The above-described technology relates to the cooler system applied to freezers, and, since two evaporators are set to have different operation times and, when operation of one evaporator is stopped to perform defrosting, the other evaporator is operated so that a cooling action is continuously maintained, this technology is limited to freezers requiring defrosting. Therefore, such technology still cannot solve problems to be solved by the present invention.

### [Disclosure]

### [Technical Problem]

Therefore, the present invention has been made in view of the above problems, and it is an object of the present invention to provide an independently controlled multi-column split cooling system in which a plurality of evaporators arranged in right and left columns in parallel and split from one another in a vertical direction are independently arranged so that operation of the evaporators is controlled, instead of a simple air blowing control method mainly used to increase cooling efficiency of a conventional cooling system, and capacities (cooling abilities) of the evaporators are adjusted in real time according to required cooling levels so as to increase energy efficiency.

### [Technical Solution]

The above problems are solved by the embodiment of the present invention having the features of claim 1. The preferred embodiment of the present invention is reflected in dependent claim 2. In accordance with the present invention, the above and other objects can be accomplished by the provision of an independently controlled multi-column split cooling system having the features of claim 1.

The evaporators may be aluminum coil-type evaporators formed in a laminate type.

### [Advantageous effects]

In an independently controlled multi-column split cooling system in accordance with the present invention, a plurality of evaporators is arranged in right and left columns in parallel and the evaporators arranged in each column are split from one another in a vertical direction so as to be independently controlled according to required cooling levels, and thus, capacities (cooling abilities) of the evaporators may be adjusted in real time and energy consumption due to use of the evaporators may be minimized.

Further, since the independently controlled multi-column split cooling system in accordance with the present invention employs aluminum coil-type evaporators formed in a laminate type rather than conventional copper coil-type evaporators, the weight of the evaporators may be greatly reduced as compared to the conventional copper coil-type evaporators and, thus, fuel efficiency may be improved and heat exchange efficiency may be increased.

### [Description of Drawings]

FIG. 1 is a view illustrating the configuration of conventional evaporators applied to buses.
FIG. 2 is a view illustrating an independently controlled multi-column split cooling system in accordance with the present invention.
FIG. 3 is an enlarged view illustrating control of evaporators by a controller in accordance with the present invention.

### [Best Mode]

Reference will now be made in detail to the exemplary embodiments of the present invention, examples of which are illustrated in the accompanying drawings. In the following description of the present invention, a detailed description of known functions and configurations incorporated herein will be omitted when it may make the subject matter of the present invention rather unclear.

A conventional cooling system applied to buses or railway vehicles uses, as exemplarily shown in FIG. 1, copper coil-type evaporators 10 in which a plurality of refrigerant pipes 11 branched off from an expansion valve 30 is connected to one large-scale evaporator 10, such cooper coil-type evaporators 10 have a heavy weight due to the nature of a material thereof and thus fuel efficiency may be lowered, and power consumption caused by operation of the evaporators 10 regardless of control of cooling operation may not be reduced.

In order to solve the above problems, the present invention provides technology in which evaporators are independently arranged and configured such that operation of the evaporators is controlled and thus capacities (cooling abilities) of the evaporators are adjusted in real time according to required cooling levels so as to increase energy efficiency.

The present invention relates to a cooling system suitable for buses or railway vehicles, in which a refrigerant executes heat exchange via a compressor, a condenser, expansion valves 300 and evaporators 100 along refrigerant lines, and a cooling cycle of the cooling system employs a known cooling method and a detailed description thereof will thus be omitted.

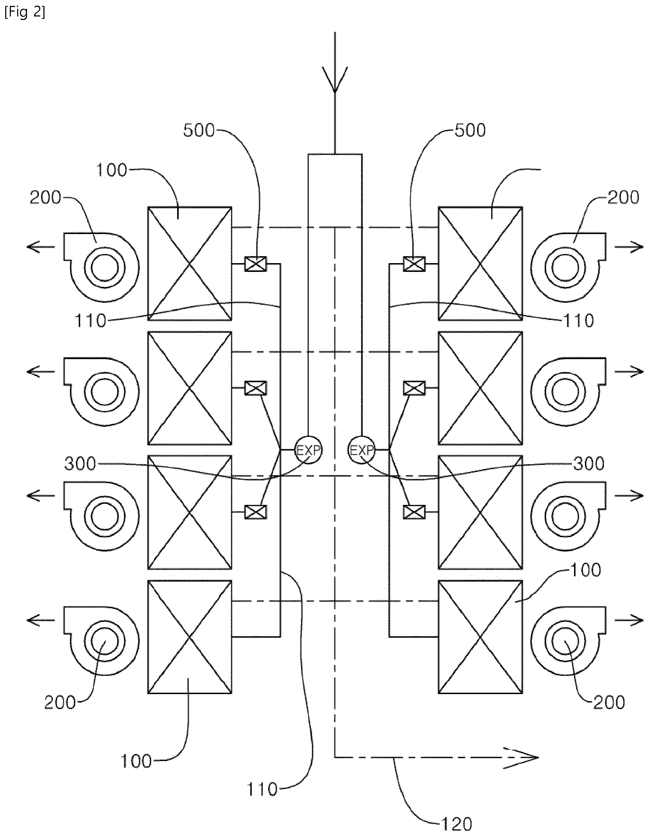

As the evaporators 100 of the present invention, as exemplarily shown in FIG. 2,

a plurality of evaporators 100 is arranged in right and left columns in parallel, the evaporators 100 arranged in each column are split from one another in a vertical direction, the evaporators 100 arranged in the vertical direction are respectively coupled to a plurality of refrigerant pipes 110 branched off from one expansion valve 300 and thus independently operated through a controller 400, and an evaporation fan 200 is installed at one side of each of the evaporators 100 so as to be controlled while interworking with operation of the corresponding evaporator 100.

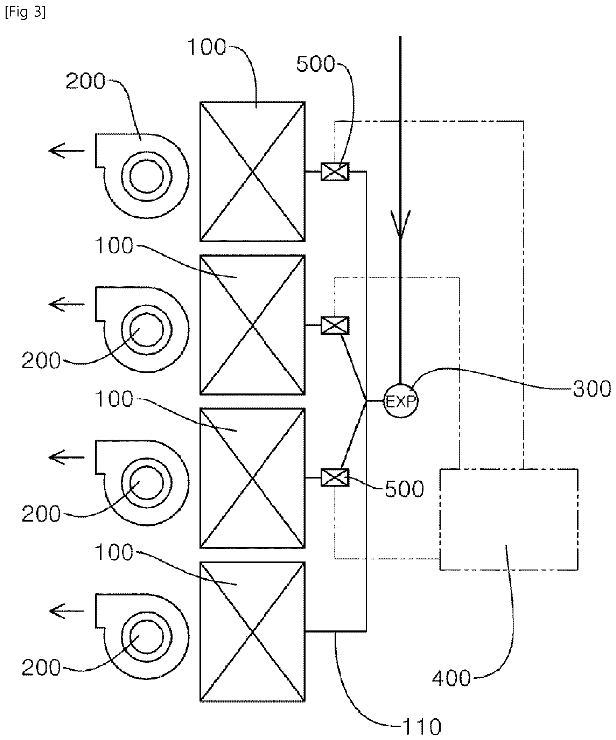

The evaporators 100 may be installed, as exemplarily shown in FIG. 2,
such that the evaporators 100 arranged in two columns, i.e., the evaporators 100 arranged in the right column and the evaporators 100 arranged in the left column, form a symmetrical structure, and four evaporators 100 may be installed in each of the columns and thus a total of eight evaporators 100 may be provided, as exemplarily shown in FIGS. 2 and 3. Here, in order to have effects caused by independent control of the evaporators 100, at least three evaporators 100 must be installed in each of the columns.

As exemplarily shown in FIG. 2, the expansion valves 300, one of which is installed at each of the right and left, and the refrigerant pipes 110 are branched off from each expansion valve 300 and are respectively connected to the evaporators 100. After the refrigerant has completed heat exchange in all the evaporators 100, the refrigerant is gathered in one discharge pipe 120 and is then discharged, the discharged refrigerant is transferred to the compressor and thereby circulation of the refrigerant is carried out.

The present invention is characterized in that a plurality of refrigerant pipes 110 prepared in a number corresponding to the number of a plurality of evaporators 100 is branched off from a single expansion valve 300 and is respectively connected to the evaporators 100, and in more detail, one refrigerant pipe 110 is connected to one evaporator 100. Electronic valves 500 are respectively installed at the refrigerant pipes 110 connected to the evaporators 100, and, thus, opening and closing of the electronic valves 500 are independently controlled according to operations of the evaporators 100.

Operation of the electronic valves 500 is controlled through the controller 400, as exemplarily shown in FIG. 3, and operation control of the evaporator 100 is carried out according to operation control of the corresponding electronic valves 500. Here, interworking control is carried out so that the evaporator fan 200 may also be operated according to operation of the corresponding evaporator 100. As such, the capacities (cooling abilities) of the evaporators 100 may be freely controlled through the controller 400 and, thus, waste of energy due to indiscriminate use of the evaporators 100 may be minimized.

Further, although manipulation of the controller 400 may be controlled according to a required cooling level by a driver's personal judgement, the controller 400 may be configured such that automatic control is carried out in consideration of an inner temperature and an outer temperature of a vehicle and the current number of people in the vehicle through an inner temperature sensor, an outer temperature sensor and passenger presence sensors of the vehicle.

As methods for sensing the current number of people in the vehicle through the passenger presence sensors, there may be a method of calculating the current number of passengers in a vehicle by adding and subtracting the number of people getting into the vehicle and the number of people getting out of the vehicle using passenger presence sensors installed at places where people get into and out of the vehicle, and a method of calculating the current number of passengers by sensing weight change of a vehicle body using a sensor.

The electronic valves 500 are not installed at all the evaporators 100 and are installed at the evaporators 100 except for the evaporator 100 which is always operated. The always-operated evaporator 100 is operated so as to perform minimal cooling, and at least one evaporator 100 may be always operated.

The evaporators 100 of present invention are characterized in that aluminum coil-type evaporators 100 formed in a laminate type are employed. If these evaporators 100 are employed, the weight of the evaporators 100 may be greatly reduced as compared to the conventional copper coil-type evaporators due to differences in materials and structures therebetween and, thus, fuel efficiency of the vehicle may be increased and high heat exchange efficiency may be acquired. The above laminate-type evaporators 100 have a structure in which dimples plates are laminated and may thus have a small size as compared to the conventional copper coil-type evaporators.

## Claims

1. An independently controlled multi-column split cooling system in which a refrigerant executes heat exchange via a compressor, a condenser, expansion valves (300), a plurality of evaporators (100), comprising:
the compressor, the condenser, the expansion valves (300),
the plurality of evaporators (100), each having an evaporation fan (200), a controller (400), a plurality of refrigerant pipes (110) and a plurality of electronic valves (500),
wherein the plurality of evaporators (100) are arranged in right and left columns in parallel; and wherein at least three evaporators (100) are arranged in each column and the evaporators (100) arranged in each column are split from one another in a vertical direction; and
wherein the refrigerant pipes (110) are respectively connected to the evaporators (100) split from one another in the vertical direction; and
wherein one expansion valve (300) is installed at each of the right column and left column and the refrigerant pipes (110) associated with the evaporators of said columns are branched off from the expansion valve (300)associated with the same column; and
wherein the controller (400) independently operates the evaporators (100) respectively connected to the refrigerant pipes (110); and
wherein the evaporation fan (200) is installed at one side of each of the evaporators (100) so as to be controlled while interworking with operation of the corresponding evaporator (100);
wherein for each of the right and left columns, one of the evaporators (100), which is always operated to perform minimal cooling, is directly connected by its refrigerant pipe (110) to the expansion valve (300) associated with the column, and for all the other evaporators (100) in the column,
the electronic valves (500) are installed at the refrigerant pipes (110) connected to the evaporators (100), and thus, opening and closing of the electronic valves (500) are independently controlled by the controller (400) according to operation of the evaporators (100).

2. The independently controlled multi-column split cooling system according to claim 1, wherein the evaporators (100) are aluminum coil-type evaporators (100) formed in a laminate type.

## Patentansprüche

1. Unabhängig gesteuertes Multikolonnentrennkühlsystem, bei dem ein Kühlmittel einen Wärmeaustausch über einen Kompressor, einen Kühler, Expansionsventile (300) und eine Vielzahl von Verdampfern (100) durchführt, umfassend:
den Kompressor, den Kühler, die Expansionsventile (300), die Vielzahl von Verdampfern (100), die jeweils einen Verdampfungsventilator (200), ein Steuerungsgerät (400), eine Vielzahl von Kühlmittelrohren (110) und eine Vielzahl von elektronischen Ventilen (500) aufweisen,
wobei die Vielzahl von Verdampfern (100) in rechten und linken Kolonnen parallel zueinander angeordnet sind; und wobei in jeder Kolonne wenigstens drei Verdampfer (100) angeordnet sind und die in jeder Kolonne angeordneten Verdampfer (100) in vertikaler Richtung voneinander getrennt sind; und
wobei die Kühlmittelrohre (110) jeweils an die Verdampfer (100) angeschlossen sind, die in vertikaler Richtung voneinander getrennt sind; und
wobei an den rechten Kolonnen und linken Kolonnen jeweils genau ein Expansionsventil (300) montiert ist und die den Verdampfern der Kolonnen zugeordneten Kühlmittelrohre (110) von dem derselben Kolonne zugeordneten Expansionsventil (300) abzweigen; und
wobei das Steuerungsgerät (400) die Verdampfer (100), die jeweils an die Kühlmittelrohre (110) angeschlossen sind, unabhängig betätigt; und
wobei der Verdampfungsventilator (200) auf jeweils einer Seite der Verdampfer (100) montiert ist, so dass er gesteuert werden kann, während er mit dem Betrieb des entsprechenden Verdampfers (100) zusammenarbeitet;
wobei für die rechten und linken Kolonnen jeweils einer der Verdampfer (100), der immer so betrieben wird, dass er eine minimale Kühlung durchführt, über sein Kühlmittelrohr (110) direkt an das der Kolonne zugeordnete Expansionsventil (300) angeschlossen ist und für alle anderen Verdampfer (100) in der Kolonne
die elektronischen Ventile (500) an den Kühlmittelrohren (110), die an die Verdampfer (100) angeschlossen sind, montiert sind und somit das Öffnen und Schließen der elektronischen Ventile (500) von dem Steuerungsgerät (400) unabhängig gemäß dem Betrieb der Verdampfer (100) gesteuert wird.

2. Unabhängig gesteuertes Multikolonnentrennkühlsystem gemäß Anspruch 1, wobei die Verdampfer (100) in einem Laminattyp ausgebildete Verdampfer (100) des Aluminiumspiraltyps sind.

## Revendications

1. Système de refroidissement divisé à multiples colonnes commandé de manière indépendante, dans lequel un liquide de refroidissement exécute l'échange de chaleur par un compresseur, un condenseur, des soupapes de détente (300), une pluralité d'évaporateurs (100), comprenant :
ledit compresseur, ledit condenseur, lesdites soupapes de détente (300), ladite pluralité d'évaporateurs (100), ayant chacun un ventilateur d'évaporation (200), un dispositif de commande (400), une pluralité de tubes de refroidissement (110), et une pluralité de soupapes électroniques (500),
dans lequel ladite pluralité d'évaporateurs (100) sont arrangés en colonnes de droite et de gauche en parallèle, et dans lequel au moins trois évaporateurs (100) sont arrangés dans chaque colonne, et lesdits évaporateurs (100) arrangés dans chaque colonne sont divisés l'un de l'autre dans une direction verticale, et
dans lequel lesdits tubes de refroidissement (110) sont respectivement connectés aux évaporateurs (100) divisés l'un de l'autre dans la direction verticale, et
dans lequel une soupape de détente (300) est montée sur chaque colonne de droite et colonne de gauche, et lesdits tubes de refroidissement (110) associés avec les évaporateurs de ces colonnes sont dérivés de la soupape de détente (300) associée avec la même colonne, et
dans lequel ledit dispositif de commande (400) indépendamment fait opérer les évaporateurs (100) respectivement connectés aux tubes de refroidissement (110), et
dans lequel ledit ventilateur d'évaporation est monté sur un côté de chacun des évaporateurs (100) pour être commandés pendant qu'ils collaborent avec l'opération de l'évaporateur (100) correspondant,
où pour chacune des colonnes de droite et de gauche, l'un des évaporateurs (100), qui toujours opère pour effectuer un refroidissement minimal, est directement connecté par son tube de refroidissement (110) à la soupape de détente 300 associée avec la colonne, et pour tous les autres évaporateurs (100) dans la colonne,
les soupapes électroniques (500) sont montées sur les tubes de refroidissement (110) connectés aux évaporateurs (100), et ainsi, le fait d'ouvrir et le fait de fermer les soupapes électroniques (500) sont indépendamment commandés par le dispositif de commande (400) selon l'opération des évaporateurs (100).

2. Système de refroidissement divisé à multiples colonnes commandé de manière indépendante selon la revendication 1, dans lequel lesdits évaporateurs (100) sont des évaporateurs (100) de type spirale en aluminium, formés dans un type de stratifié.
